Europäisches Patentamt

European Patent Office

Office européen des brevets

(19)

(11) Publication number: 0 414 429 A2

# EUROPEAN PATENT APPLICATION

(21) Application number: 90308896.1

(22) Date of filing: 13.08.90

(51) Int. Cl.5: G11B 7/013, G11B 7/09

(30) Priority: 22.08.89 JP 215569/89

(43) Date of publication of application:
27.02.91 Bulletin 91/09

(84) Designated Contracting States:
DE FR GB NL

(71) Applicant: SONY CORPORATION
7-35, Kitashinagawa 6-chome Shinagawa-ku
Tokyo(JP)

(72) Inventor: Endoh, Sohmei
c/o Sony Corporation, 7-35 Kitashinagawa
6-chome
Shinagawa-ku, Tokyo(JP)
Inventor: Yamamoto, Masanobu
c/o Sony Corporation, 7-35 Kitashinagawa
6-chome
Shinagawa-ku, Tokyo(JP)

(74) Representative: Ayers, Martyn Lewis Stanley
et al
J.A. KEMP & CO., 14 South Square, Grays Inn
London WC1R 5LX(GB)

(54) Optical disc.

(57) An optical disc including a disc substrate having guide grooves (2) of spiral shape or concentric shape, and pits (4) formed between adjacent guide grooves according to predetermined information signals such as address information signals, etc. An optical recording layer is formed in the shape of a thin film on the disc substrate. The guide grooves (2) have a depth ranging from about $\lambda/8$ to about $\lambda/4$ and the pits (4) have a depth ranging from about $\lambda/4$ to about $\lambda/2$, wherein $\lambda$ is a wavelength of a reproducing light beam.

FIG. 4

# OPTICAL DISC

The present invention relates to an optical disc, in particular an optical disc in which information data are recorded between guide grooves as pits.

One form of a rewritable optical disc. is a magneto-optical disc in which information signals are recorded by changing the direction of magnetization of magnetic domains of a vertical magnetising film.

When information signals are recorded on such a magneto-optical disc by means of a recording and/or reproducing apparatus, a magnetic field modulated according to the information signals is externally applied to the vertical magnetising film while the latter is heated to above its Curie temperature by a light beam such as a laser beam. In the vertical magnetising film, the magnetization of the magnetic domains is initially oriented in one direction. In order to reproduce the information signals thus recorded, the disc is irradiated with a light beam of lower intensity than that used for recording, and the information signals are reproduced by optically detecting the rotation of the plane of polarization of the light beam reflected by the vertical magnetising film. The rotation of the plane of polarization takes place due to the Kerr effect.

Generally, spiral guide grooves (hereinafter referred to as "pre-grooves") are formed in such a magneto-optical disc. During recording and reading of information data, an optical head is guided by the pre-grooves to carry out tracking control to scan the land portions, as recording tracks, between the pre-grooves. Thus, information data are recorded on recording tracks by the optical head and a magnetic head which applies the external magnetic field modulated by the information data.

In the recording tracks, there are previously formed pits at predetermined intervals to record address information, etc. According to the address information, any position on the recording tracks can be accessed by the optical head to record and reproduce information data by means of the magnetic head.

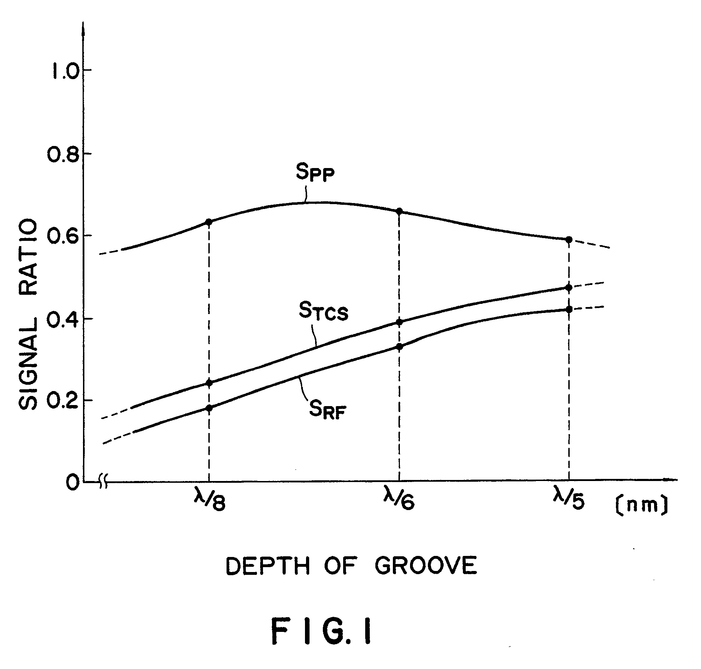

In practice, the depth of the pre-grooves of the magneto-optical disc is designed to be about 1/8 of the wavelength λ of the light beam used for reading the data so that sufficiently high signal ratio is provided for each of the push-pull signal $S_{PP}$ and the track-cross signal $S_{TCS}$ as shown in figure 1 of the accompanying drawings. The signal ratio is the ratio of the detected output signal of each of the push-pull signal $S_{PP}$ and the track-cross signal $S_{TCS}$, which are obtained by reproducing pre-grooves and pits, to the detected output signal provided by a reflected light beam from the so-called mirror region, ie, no signal recorded portions on the recording surface of the magneto-optical disc. The no signal recorded portions have no pre-grooves nor pits.

The depth of the pits is set to about 1/4 of the wavelength λ of the reproducing light beam so as to provide the necessary depth of modulation as well as a sufficient signal ratio of the reproduced signal $S_{RF}$.

The push-pull signal $S_{PP}$ is a differential signal representing the difference between detected output signals outputted from two detectors of a dual detector unit, which is divided along the recording tracks. The track-cross signal $S_{TCS}$ is a sum signal which is given by the sum of the detected output signals provided from the two detectors when the optical head crosses recording tracks to move radially over the magneto-optical disc during accessing. The reproducing signal $S_{RF}$ is a sum signal representing the sum of detected output signals outputted from the two detectors during scanning of recording tracks.

The utility of the magneto-optical disc is enhanced if an optically reproducible read only memory (ROM) region and a recordable region are provided in predetermined portions of a single magneto-optical disc. Data base information such as dictionary data and various application programs are recorded in the ROM region and are reproduced by optical means such as an optical head. The recordable region can be accessed for recording and reproduction with a magneto-optical means including the optical head and a magnetic head.

In such a magneto-optical disc, the amount of information recorded by pits on the land portion is increased considerably. Thus, the duty of the pits becomes excessively large, where the duty is the ratio of the length of each pit over the total length of the pit and the subsequent pit-free portion. This involves the problem such that it is hard to reproduce the push-pull signal $S_{PP}$ and the track-cross signal $S_{TCS}$.

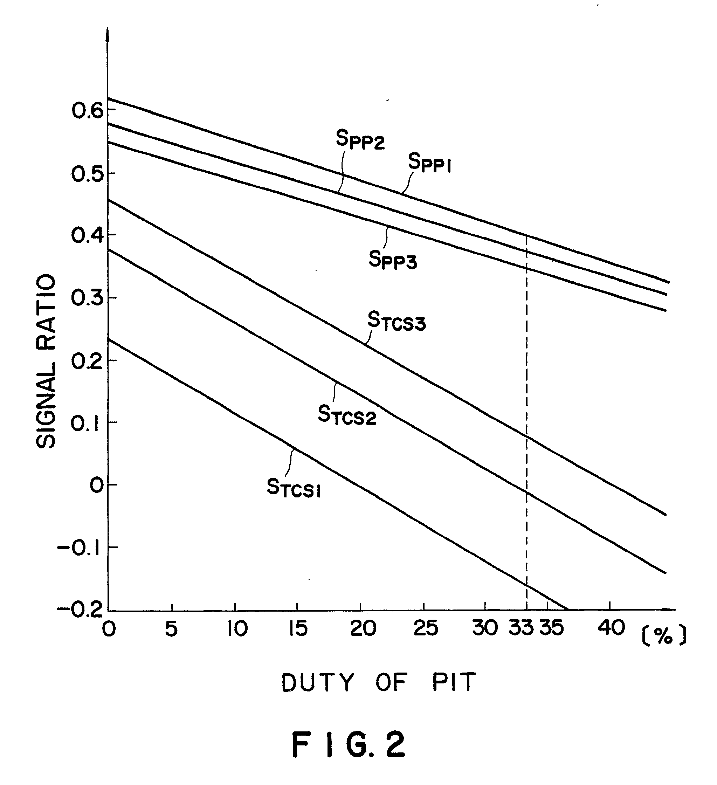

The relationship between the duty and the signal ratio is shown in figure 2. In this graph, when the depth of the pre-grooves are set to 1/8 of the wavelength λ(λ = 780 nm) of the reproducing light beam, the signal ratio of the track-cross signal $S_{TCS1}$ decreases as the duty of the pits increases. The signal ratio of the track-cross signal $S_{TCS1}$ does not fall within a range (0.1 ≦ $S_{TCS}$ ≦ 0.6 or 0.2 ≦ $S_{TCS}$ ≦ 0.6), which is required by standards of the International Organisation for Standardization (ISO), at a duty of information data recorded by pits (the duty is limited so as not to exceed 33% by the modulation system).

The signal ratio of the push-pull signal $S_{PP1}$ also decreases as the duty of the pits increases, so that the signal ratio of the push-pull signal $S_{PP1}$ becomes below the range ($0.4 \leq$ push-pull signal $S_{PP} \leq 0.65$), which is required by ISO standards, at or below a duty value of 33% of the information data recorded by the pits.

When the depth of grooves is larger than $\lambda/8$, for example, $\lambda/7$ or $\lambda/6$, the signal ratio of track-cross signal $S_{TCS2}$ or track-cross signal $S_{TCS3}$ also decreases as the duty of pits increases and does not fall within the range required at or below a duty value of 33% of information data recorded by the pits.

Moreover, the signal ratios of the push-pull signal $S_{PP2}$ and push-pull signal $S_{PP3}$ also do not fall in the range ($0.4 \leq$ push-pull signal $S_{PP} \leq 0.65$) Thus, in practice it is difficult to provide both a ROM region and a recordable region in a single optical disc, the former being reproducible by optical means and the latter being accessible by magneto-optical means to record and reproduce data.

Accordingly, it is an object of the present invention to provide an optical disc in which adverse effects of the duty of pits are effectively reduced.

According to the present invention, there is provided an optical disc in which guide grooves are formed, information signals are pre-recorded at predetermined positions between adjacent guide grooves by means of pits, and the information signals recorded are adapted for reproduction by a reproducing light beam of wavelength $\lambda$, characterised in that:

said guide grooves have a depth ranging from about $\lambda/8$ to about $\lambda/4$; and

said pits have a depth ranging from about $\lambda/4$ to about $\lambda/2$.

With such depths of the guide grooves and the pits, reproduction signals for tracking and reproduction signals from the pits are positively obtained, and the depth of modulation of the reproduction signals obtained from the pits are improved. Thus, according to the present invention, a ROM region and a recordable region can be provided together in a single optical disc with a simple construction.

Other features of the invention are defined in the appended claims.

The invention will be further described by way of non-limitative example with reference to the accompaning drawings, in which:-

Figure 1 is a characteristic graph showing the relationship between the depth of grooves and the signal ratio;

Figure 2 is a characteristic graph illustrating the signal ratio against the duty of pits according to the depth of pre-grooves;

Figure 3 is an enlarged fragmentary perspective view with a radial section of an optical disc according to the present invention;

Figure 4 is a characteristic graph illustrating the relationship between the depth of rectangular pits and the signal ratio; and

Figure 5 is a characteristic graph showing the signal ratio against the duty of pits according to the depth of the pits.

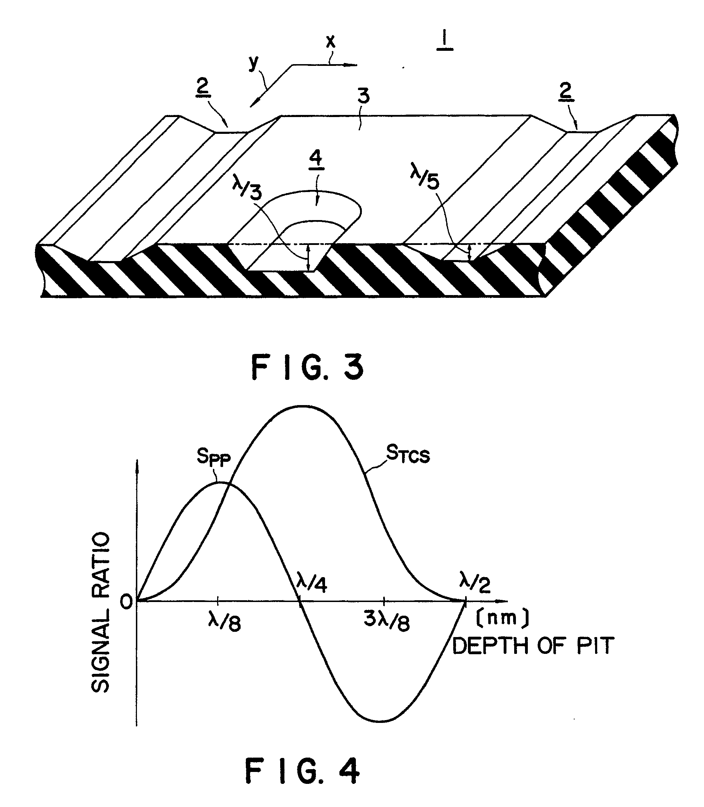

Referring now to figure 3, reference numeral 1 designates part of an inner peripheral portion of an optical disc sectioned in the radial direction shown by the arrow x. A tracking pre-grooves 2 are spirally formed in the optical disc to extend in the circumferential direction shown by the arrow y. Pits 4 are formed in a land portion 3 between adjacent pre-grooves 2 and 2 to record information data, for example, an application program for a computer.

In this optical disc, a magneto-optical recording layer is formed by sputtering or evaporating a vertical magnetic recording material or the like material on a transparent substrate. The transparent substrate may be made of a polycarbonate, PMMA (polymethylenemethacrylate), etc, and has the pre-grooves 2 and the pits 4 performed in it as in the conventional optical disc. Information data can be recorded on or reproduced from the land portion 3 at an outer peripheral portion of the optical disc by a known magneto-optical means which includes an optical head and a magnetic head capable of generating an external magnetic field.

When the pits 4 are formed in the land portion 3 in the shape of an ideal rectangle, as shown in figure 4, the signal ratio of the track-cross signal $S_{Tcs}$ varies sinusoidally with a maximum value at a depth of $\lambda/4$ as the depth of the pits 4 varies from 0 to $\lambda/2$ while the signal ratio of the push-pull signal $S_{PP}$ also varies sinusoidally with a maximum value at a depth of $\lambda/8$, 0 at a depth of $\lambda/4$ and a minimum value at a depth of $3\lambda/8$.

In this embodiment, according to such a principle the depth of the pre-grooves 2 is set to about $\lambda/5$ and the depth of the pits 4 about $\lambda/3$ where $\lambda$ is the wavelength (= 780 nm) of the reproduction light beam.

However, the depths of the pre-grooves and pits are not limited to such values but may be from about $\lambda/8$ to about $\lambda/4$ and from about $\lambda/4$ to about $\lambda/2$, respectively, in view of the wavelength of the reproducing light beam and optical characteristics such as the aperture of objective lens. Within these ranges, the present invention achieves satisfactory results.

Although in this embodiment the optical disc has spiral pre-grooves the present invention is not limited to such an optical disc and may be applied to an optical disc with concentric pre-grooves, for example.

In the embodiment, the ROM region is formed in an inner peripheral portion of the optical disc but it may be formed in an outer peripheral portion or on the overall surface of the optical disc. In the latter case, a read only memory disc which provides sufficient signal ratios of the push-pull signal and the track-cross signal can be obtained.

Although information may be recorded to or reproduced from the recordable region by magneto-optical means, the present invention may be applied to other rewritable optical discs in which recording and reproducing of data are carried out by other means.

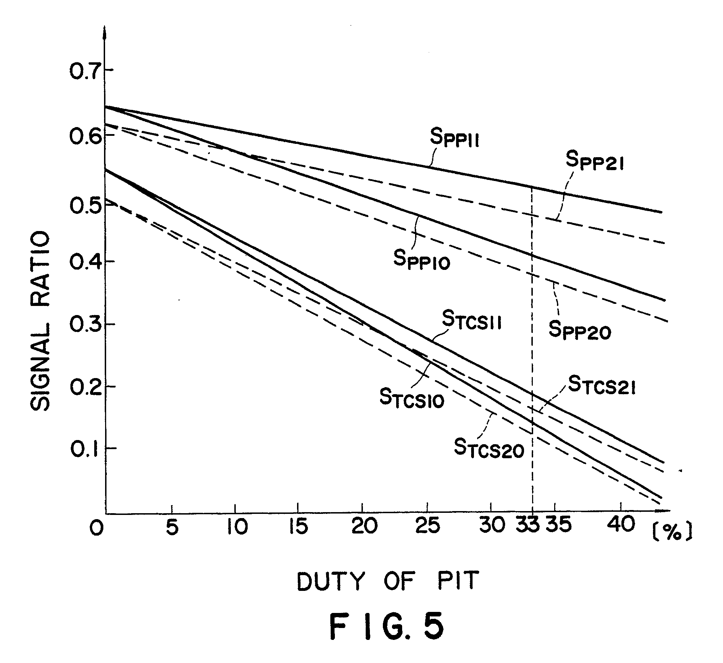

According to experiments, the depth of pre-grooves 2 was set to about $\lambda/5$ and that of pits 4 was designed to be equal to a depth of conventional pits, ie, about $\lambda/4$ where $\lambda$ was the wavelength (780 nm) of a reproducing light beam. The results are given in figure 5. In these experiments, although the signal ratio of the push-pull signal $S_{PP10}$ decreased as the duty value of the pits 4 increased, in the range of the duty of information data recorded by the pits, the signal ratio of the push-pull signal $S_{PP}$ in a ROM region and a recordable region fell within the range ($0.4 \leq$ push-pull signal $S_{PP} \leq 0.65$) required by ISO standards. However, the signal ratio of the track-cross signal $S_{TCS10}$ dropped excessively with an increase in duty of pits 4 and did not satisfy the range of requirement according to ISO standards ($0.1 \leq$ track-cross signal $S_{TCS} \leq 0.6$ or $0.2 \leq$ track-cross signal $S_{TCS} \leq 0.6$).

In other experiments, the depth of pre-grooves 2 was about $\lambda/5$ while the depth of pits 4 was about $\lambda/3$. The pits were deeper than conventional pits. As shown, within the range of the duty of information data the signal ratio of the track-cross signal $S_{TCS11}$ fell within the range according to ISO standards as well as the signal ratio of the push-pull signal $S_{PP11}$. In these experiments, a sufficient signal ratio was provided to each of both the track-cross signal $S_{TCS}$ and the push-pull signal $S_{PP}$ by effectively removing the adverse effects of the duty of information data recorded by pits. Thus, in each of these optical discs, the ROM region and the recordable region were provided together, and hence the optical disc was enhanced in utility.

The wavelength $\lambda$ of the reproducing light beam is not limited to 780 nm, and it was confirmed that other conventionally used wavelengths thereof provided similar effects.

For instance, when the wavelength was 830 nm according to ISO standards and the depth of the pits was $\lambda/4$, the relationship between the duty of pits and the track-cross signal $S_{TCS20}$ and the relationship between the duty and the push-pull signal $S_{PP20}$ are given by the dotted lines in figure 5. From the graph, it is clear that the signal ratio of each of the track-cross signal $S_{TCS20}$ and the push-pull signal $S_{PP20}$ in ROM regions and recordable regions did not satisfy the range of requirements according to ISO standards. On the contrary, when the depth of the pits was $\lambda/3$ with an equal wavelength, the track-cross signal $S_{TCS21}$ and the push-Pull signal $S_{PP21}$ satisfied the signal ratio range requirement.

## Claims

1. An optical disc in which guide grooves are formed, information signals are pre-recorded at predetermined positions between adjacent guide grooves (2) by means of pits (4), and the information signals recorded are adapted for reproduction by a reproducing light beam of wavelength $\lambda$, characterised in that:
said guide grooves (2) have a depth ranging from about $\lambda/8$ to about $\lambda/4$; and
said pits (4) have a depth ranging from about $\lambda/4$ to about $\lambda/2$.

2. An optical disc according to claim 1, wherein the depth of said guide grooves (2) is about $\lambda/5$, and the depth of the pits (4) is about $\lambda/3$.

3. An optical disc in which an information signal recordable region and a reproduction only region are provided along guide grooves (2) formed therein, the reproduction only region having predetermined information signals recorded therein by pits (4), and the information signals are adapted for reproduction by a reproducing light beam of wavelength $\lambda$, and :
said guide grooves (2) have a depth ranging from about $\lambda/8$ to about $\lambda/4$ ; and
said pits (4) have a depth ranging from about $\lambda/4$ to about $\lambda/2$.

4. An optical disc according to claim 3, wherein said reproduction only region is provided between adjacent guide grooves (2) in the recordable region.

5. An optical disc according to claim 3 or 4, wherein said reproduction only region is arranged radially inwardly of said recordable region.

6. An optical disc according to claim 3 or 4, wherein said reproduction only region is arranged radially outwardly of said recordable region.

7. An optical disc according to any one of claims 3 to 6, wherein the depth of said guide grooves (2) is about $\lambda/5$, and the depth of said pits (4) is about $\lambda/3$.

8. An optical disc in which information signals recorded are adapted for reproduction by a reproducing light beam of wavelength $\lambda$, comprising:
a disc substrate including guide grooves (2) and pits (4) formed between adjacent guide grooves according to predetermined information signals;

and
an optical recording film layer formed on said disc substrate, and wherein
said guide grooves (2) have a depth ranging from about λ/8 to about λ/4; and
said pits (4) have a depth ranging from about λ/4 to about λ/2.

9. An optical disc according to claim 8, wherein the depth of said guide grooves (2) is about λ/5, and the depth of said pits (4) is about λ/3.

10. An optical disc according to claim 8, wherein said pits (4) are formed in each portion of said disc substrate between adjacent guide grooves (2).

11. A method of reproducing information from a disc according to any one of claims 1 to 10 using an optical reading beam of said wavelength λ.

12. An apparatus for reproducing information from a disc according to any one of claims 1 to 10 comprising reading means for irradiating a selected area of the disc with a reading beam of said wavelength λ.

FIG. 1

FIG. 2

F I G. 3

F I G. 4

F I G. 5